# EUROPÄISCHE PATENTSCHRIFT

(11) **EP 0 895 680 B1**
(45) Veröffentlichungstag und Bekanntmachung des Hinweises auf die Patenterteilung: **29.09.2004**
(21) Anmeldenummer: 97920755.2
(22) Anmeldetag: 24.04.1997
(51) Int. Cl.: H04J 3/14, H04J 3/08, H04J 3/12

(54) **SYNCHRONES ÜBERTRAGUNGSSYSTEM MIT FEHLERORTUNGSFUNKTION UND MONITOREINRICHTUNG DAFÜR**
SYNCHRONOUS TRANSMISSION SYSTEM WITH FAULT LOCATION FUNCTION AND MONITORING DEVICE THEREFOR
SYSTEME DE TRANSMISSION SYNCHRONE AVEC FONCTION DE LOCALISATION D'ERREUR, ET APPAREIL DE CONTROLE ASSOCIE

(30) Priorität: 24.04.1996 DE 19616286
(43) Veröffentlichungstag der Anmeldung: 10.02.1999
(73) Patentinhaber: ALCATEL, 75008 Paris (FR)
(72) Erfinder: DIVE, Geoffrey, D-71546 Anspach (DE); BEISEL, Werner, D-71679 Asperg (DE)
(74) Vertreter: Schätzle, Albin, Dipl.-Phys.
(86) Internationale Anmeldenummer: PCT/EP1997/002428
(87) Internationale Veröffentlichungsnummer: WO 1997/040598

(56) Entgegenhaltungen:
- DE-A- 4 409 644
- GB-A- 2 287 608
- US-A- 5 390 179
- IEEE TRANSACTIONS ON COMMUNICATIONS, Bd. 42, Nr. 2/03/04, 1.Februar 1994, Seiten 1065-1075, XP000447371 YASUDA Y ET AL: "AUTOMATED NETWORK CONNECTION TRACING AND DATA GATHERING METHODS IN THE SDH NETWORK"

## Beschreibung

Die Erfindung betrifft ein synchrones Übertragungssystem für zu einem Multiplexsignal zusammengefaßte Digitalsignale gemäß dem Oberbegriff des Anspruchs 1. Außerdem betrifft die Erfindung eine Monitoreinrichtung für ein synchrones Übertragungssystem und ein Verfahren zum Lokalisieren eines Fehlers in einer Übertragungsstrecke zwischen einer Datenquelle und einer Datensenke in einem synchronen Übertragungssystem

Ein synchrones Übertragungssystem für zu einem Multiplexsignal zusammengefaßte Digitalsignale ist z. B. ein Übertragungssystem für die Synchrone Digitale Hierarchie SDH oder ein Übertragungssystem für synchrone optische Netze gemäß dem SONET Standard, den das American National Standards Institute angenommen hat. In einem Übertragungssystem für die Synchrone Digitale Hierarchie SDH und in einem SONET Übertragungssystem werden zu übertragende Signale nach einem festgelegten Muster zu einem Multiplexsignal zusammengefaßt und nach Rahmen strukturiert. Ein solcher Rahmen wird bei SDH als synchroner Transportmodul STM bezeichnet; er ist z. B. in der ITU-T Recommendation G.707 (Draft) ( 1 1 /95) beschrieben. Der Rahmen besteht aus 270 Spalten und 9 Zeilen. In jeder Spalte einer Zeile ist jeweils ein Byte enthalten: In den Zeilen 1 bis 3 und 5 bis 9 ist jeweils in den Spalten 1 bis 9 der sogenannte "Section Overhead" (SOH) für Steuerungs- und Fehlererkennungsinformationen vorgesehen. In der vierten Zeile von Spalte 1 bis 9 ist eine Zeigerverwaltungseinheit vorgesehen, die als "AU-Pointer" bezeichnet ist. In den restlichen Spalten und Zeilen ist die Nutzinformation, die "STM-1 Payload" untergebracht. Eine "STM-1 Payload" ist z. B. in einem virtuellen Container VC-4 untergebracht, der aus einem Bereich für Nutzdaten (Payload) und einem Bereich für Steuerdaten (Path Overhead, POH) besteht.

In einem Übertragungssystem sind einzelne Netzelemente durch ein oder mehrere Übertragungsmedien (z. B. Kupferkabel, Lichtwellenleiter) miteinander verbunden. Einem der Netzelemente wird die Funktion einer Zentrale zugewiesen, die das Übertragungssystem überwacht und steuert. Die Zentrale und deren Funktionen werden üblicherweise als Netzwerkmanagementeinrichtung oder als "Network Management System NMS" betrachtet. Dieses NMS stellt z. B. eine Unterbrechung in der Übertragungsstrecke fest, leitet den Signalverkehr auf eine ungestörte Übertragungsstrecke um und veranlaßt die Reparatur der Unterbrechung. Die Funktionen der Netzwerkmanagementeinrichtungen sind bekannt, z. B. aus O. Gonzales Soto et al, "Netzplanung und -management", Elektrisches Nachrichtenwesen (Alcatel), 4. Quartal 1993, Seiten 366 bis 377. Darin sind die Grundprinzipien des Managements der Netzschicht (Network Level Management NLM) beschrieben. Übertragungspfade und zugehörige Verbindungen werden durch NLM-Prozesse auf ihre Verfügbarkeit und ihre Leistungsfähigkeit überprüft. NLM-Prozesse sind verantwortlich für eine Zuordnung bestimmter Nachrichten der Netzelemente zu speziellen Elementen in der Netzschicht.

An einem Netzelement wird ein für ein anderes Netzelement bestimmtes Signal in die Übertragungsstrecke eingefügt; dieses Netzelement stellt dabei eine Signalquelle dar. Das Netzelement, das dieses Signal empfängt, stellt dagegen eine Signalsenke dar. Das NMS überwacht, ob das Signal an der Signalsenke ankommt und ob im Signal Fehler aufgetreten sind. Daraus ist ersichtlich, daß das Übertragungssystem und das NMS am wirkungsvollsten arbeiten, wenn das Übertragungssystem in der Verantwortung eines einzigen Systembetreibers liegt, der auf die Signalquelle und auf die Signalsenke gleichermaßen Zugriff hat.

Der Bereich eines virtuellen Containers für die Steuerdaten, der POH, ist in der genannten ITU-T Recommendation G.707 (Draft) in Abschnitt 9.3, Seite 62 bis 68 detailliert beschrieben. Der POH, z. B. eines VC-3 oder VC-4, besteht aus neun Bytes, die mit J1, B3, C2, G 1, F2, H4, F3 und N 1 bezeichnet sind. Das G1 Byte (s. Abschnitt 9.3.1.4) dient zur Übertragung von Informationen, die Aussagen über den Zustand der Übertragungsstrecke ermöglichen. Das fünfte Bit des G1 Bytes ist gesetzt (logischer Zustand 1), wenn die Übertragungsstrecke fehlerhaft ist, und bietet so eine Möglichkeit, um die Übertragungsstrecke zu überwachen. Das fünfte Bit ist als Remote Defect indication (RDI) bezeichnet.

Eine weitere Möglichkeit, die Übertragungsstrecke zu überwachen, ist in Annex C, Seiten 91 bis 103, und Annex D, Seiten 104 bis 107, der ITU-T Recommendation G.707 angegeben. Das dort angegebene Überwachungsprotokoll (Tandem Connection Monitoring protocol, TCM) verwendet das N 1 Byte des POH, das als Tandem Connection Overhead. (TCOH) bezeichnet ist.

In dem Artikel "Automated Network Connection Tracing and Data Gathering Methods in the SDH Network" (IEEE Transactions on Communications vol.42 no. 2/3/4, Februar/March/April 1994, S.1065-1075) von Y. Yasuda et al. werden zwei Verfahren angegeben, um Verbindungen in einem Einzelübertragungssystem zu testen: Die ID stamp Methode und die Path Trace Methode. Beide Verfahren nutzen die einzige zentrale Netzwerkmanagementeinrichtung, die dem einen Einzelübertragungssystem zugeordnet ist, um Überwachungsdaten zu sammeln, auszuwerten und die Überwachungsfunktionen zu koordinieren. In einen Übertragungssystem, das sich aus mehreren Einzelübertragungssystemen mit jeweils eigenen Netzwerkmanagementeinrichtungen zusammensetzt, sind diese Verfahren daher nicht anzuwenden.

In bekannten Übertragungssystemen für die Synchrone Digitale Hierarchie, die sich aus mehreren Einzelübertragungssystemen mit jeweils eigenen Netzwerkmanagementeinrichtungen zusammensetzen, sind keine Maßnahmen vorgesehen, um auftretende Störungen zu lokalisieren.

Der Erfindung liegt die Aufgabe zugrunde, ein synchrones Übertragungssystem und ein Verfahren anzugeben, bei dem eine effektive und kostengünstige Störungslokalisierung gewährleistet ist. Ein die Aufgabe lösendes synchrones Übertragungssystem ist Gegenstand des Anspruchs 1, ein Verfahren Gegenstand des Anspruchs 4. Der Erfindung liegt außerdem die Aufgabe zugrunde, eine Monitoreinrichtung für ein synchrones Übertragungssystem anzugeben. Eine diese Aufgabe lösende Monitoreinrichtung ist Gegenstand des Anspruchs 3. Vorteilhafte Ausgestaltungen der Erfindung sind in den Unteransprüchen angegeben.

Ein Vorteil der Erfindung ist, daß eine exakte Störungsortung und eine Identifizierung der Art der Störung möglich ist.

Die Erfindung wird im folgenden beispielhaft anhand einer Zeichnung näher erläutert, in der ein schematisches synchrones Übertragungssystem gezeigt ist, das aus mehreren Einzelübertragungssystemen Sx, x = 1 bis 7, besteht. Das synchrone Übertragungssystem und die Einzelübertragungssysteme Sx sind SDH Systeme. Die Einzelübertragungssysteme Sx sind durch ein oder mehrere Übertragungsmedien 1, z. B. Lichtwellenleiter oder Koaxialkabel, miteinander verbunden. Jedes Einzelübertragungssystem Sx und darin vorhandene Netzelemente (Cross-Connect und Add/Drop Multiplexer) werden von einer übergeordneten Netzwerkmanagementeinrichtung NMS überwacht und gesteuert.

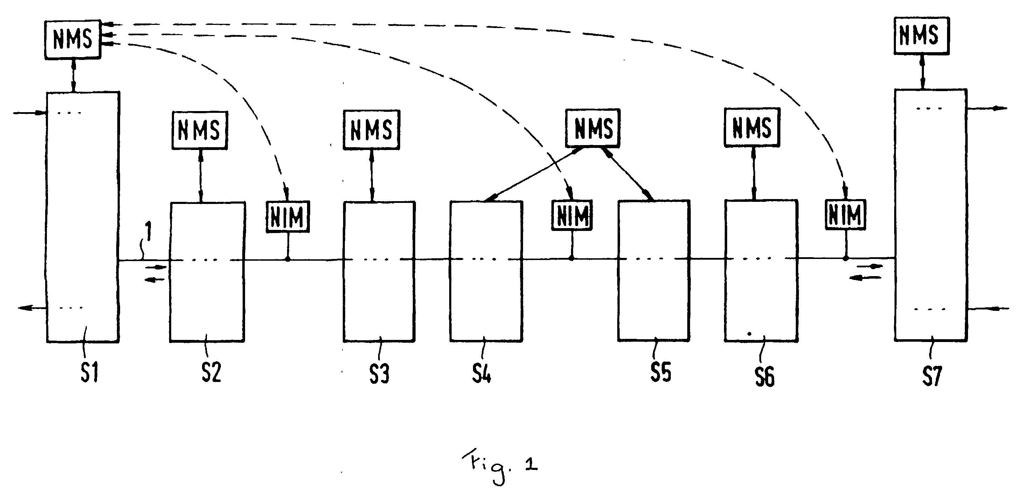

In der Figur sind die Einzelübertragungssysteme Sx nacheinander von links nach rechts angeordnet. Bis auf die Einzelübertragungssysteme S4 und S5, die eine gemeinsame Netzwerkmanagementeinrichtung NMS haben, ist jedem Einzelübertragungssystem Sx eine einzige Netzwerkmanagementeinrichtung NMS zugeordnet. Das Einzelübertragungssystem S1 stellt im gezeigten Übertragungssystem eine Signalquelle für z. B. ein STM-1 Signal dar, das zu einer Signalsenke, dem Einzelübertragungssystem S7, übertragen werden soll. Die so zwischen der Signalquelle und der Signalsenke zustande kommende Übertragungsstrecke stellt eine Mietleitung dar, die ein Auftraggeber beim Betreiber des Einzelübertragungssystems S1 bestellt hat. Der Auftraggeber möchte seine Nutzdaten gesichert zum Einzelübertragungssystem S7 übertragen.

Um dies zu gewährleisten, sind mehrere Monitoreinrichtungen NIM in die Mietleitung eingefügt. In der Figur sind die Monitoreinrichtungen NIM zwischen folgenden Einzelübertragungssystemen Sx eingefügt: zwischen S2 und S3, zwischen S4 und S5 und zwischen S6 und S7. Diese Monitoreinrichtungen NIM sind von der Netzwerkmanagementeinrichtung NMS der Signalquelle (S1) gesteuert und überwacht. Zu diesen Netzwerkmanagementeinrichtung NMS senden die Monitoreinrichtungen NIM ihre Nachrichten. Dadurch hat die Netzwerkmanagementeinrichtung NMS der Signalquelle Kontrolle über die gesamte Mietleitung und kann dadurch ihre Aufgabe, eine gesicherte Datenübertragung zu gewährleisten besser erfüllen. Die Monitoreinrichtungen NIM können wie in der Figur gezeigt außerhalb der Einzelübertragungssystem Sx angeordnet sein; es ist aber auch eine Anordnung innerhalb der Einzelübertragungssysteme Sx oder eine Kombination der beiden Anordnungsmöglichkeiten möglich. In allen Fällen werden die Monitoreinrichtungen NIM jedoch von der jeweiligen Signalquelle gesteuert und überwacht.

Eine für eine solche Steuerungs- und Überwachungsfunktion erforderliche Kommunikationsmöglichkeit wird durch einen Datenkanal ermöglicht. Für diesen Datenkanal können freie Bits der POH Bytes K3, K4, N1, N2 oder G1 benutzt werden. Durch diesen Datenkanal können die Monitoreinrichtungen NIM wie bereits erwähnt Nachrichten in Aufwärtsrichtung zur Signalquelle senden. Beispiele für solche Nachrichten sind u. a.: "Signalverlust" (LOS), Grund und Ort des Signalverlustes, "Nachricht empfangen" und Antworten auf "Fragen" (polling) der Signalquelle an die in Abwärtsrichtung angeordneten Monitoreinrichtungen NIM.

Sendet die Signalquelle im Datenkanal eine Nachricht z. B. an die von ihr am weitesten entfernte Monitoreinrichtung NIM, wird diese Nachricht von den näher gelegenen Monitoreinrichtungen NIM unverändert (transparent) durchgelassen.

Durch einen solchen Datenkanal wird die Möglichkeit geschaffen, die gesamte Mietleitung durch die Signalquelle zu überwachen, auch wenn sich die Mietleitung über Ländergrenzen hinweg erstreckt oder wenn die Mietleitung in einem Land aus mehreren Einzelübertragungssystemen zusammengesetzt ist, die mehreren unterschiedlichen Betreibern gehören. Eine solche Möglichkeit wird an Bedeutung gewinnen, denn multinationale Konzerne haben einen zunehmenden Bedarf an internationalen Telekommunikationsverbindungen und an gemieteten Leitungen (leased lines) haben. Hinzukommt, daß im Zuge der Deregulierung des Telekommunikationsmarktes eine größere Anzahl von Systembetreibern vorhanden sein wird. Dies hat zur Folge, daß die Signalübertragung von der Signalquelle zur Signalsenke unter Umständen über eine Vielzahl von Einzelübertragungssystemen erfolgt, die einer entsprechend hohen Anzahl von Systembetreibern gehören.

Das Problem, das sich daraus ergibt, wird anhand eines Beispiels beschrieben. Ein Kunde hat mit einem Systembetreiber einen Vertrag über eine gemietete Leitung geschlossen, die über mehrere Ländergrenzen, über eine Vielzahl von Einzelübertragungssystemen, die mehreren Systembetreibern gehören, und über mehrere Zeitzonen führt. Der Systembetreiber, der den Vertrag mit dem Kunden geschlossen hat, ist dem Kunden gegenüber für die gesamte gemietete Leitung verantwortlich. Das NMS, das der Systembetreiber für sein Übertragungssystem hat, ist ausschließlich in seinem Übertragungssystem wirksam. Tritt in der gemieteten Leitung ein fehler, z. B. eine Unterbrechung auf, sendet die am Ende der gemieteten Leitung vorhandene Signalsenke ein Alarmsignal (Remote - Defect Indication (RDI) oder Alarm Indication Signal (AIS)) zur Signalquelle, wodurch der Signalquelle nur mitgeteilt wird, daß die Signalsenke das Signal nicht empfangen hat. Eine Lokalisation der Unterbrechung ist durch das Alarmsignal nicht möglich. Auch das bereits erwähnte Überwachungsprotokoll (TCM) erlaubt keine Lokalisation der Störung, denn das Überwachungsprotokoll wird nur innerhalb der Einzelübertragungssysteme angewendet. In jedem Einzelübertragungssystem sind eine TCM Quelle und eine TCM Senke vorhanden, die mit Hilfe des N1 Bytes miteinander kommunizieren. Das N1 Byte wird demnach nicht von Einzelübertragungssystem zu Einzelübertragungssystem übertragen.

Die Störungslokalisierung erfolgt in der Praxis bisher dadurch, daß der Systembetreiber, der den Vertrag mit dem Kunden hat, die Systembetreiber der übrigen Einzelübertragungssysteme anruft und den Zustand der Einzelübertragungssysteme erfragt. Dieses Vorgehen ist uneffektiv und zeitaufwendig; hinzukommt, daß viele Netzelemente unbemannt sind, daß oft Verständigungsprobleme bestehen und daß aufgrund der verschiedenen Zeitzonen Unterschiede in den Arbeitszeiten bestehen.

## Patentansprüche

1. Synchrones Übertragungssystem für zu Multiplexsignalen zusammengefaßte Digitalsignale,
- welches eine Übertragungsstrecke zwischen einer Signalquelle (S1) und einer Signalsenke (S7) umfaßt,
- bei dem mehrere jeweils mehrere Netzelementen enthaltende Einzelübertragungssysteme (Sx) vorhanden sind, die jeweils einer Netzwerkmanagementeinrichtung (NMS) zugeordnet sind,
- bei dem die Digitalsignale byteweise in Rahmen eines festgelegten Rahmenformats eingefügt sind, und
- bei dem jeder Rahmen Bereiche für Steuerdaten und Bereiche für Nutzdaten hat,
**dadurch gekennzeichnet,**
**daß** auf der Übertragungsstrecke verteilt Monitoreinrichtungen (NIM) vorhanden sind, die von der Netzwerkmanagementeinrichtung der Signalquelle kontrolliert werden und die Zugriff auf mindestens ein festgelegtes Byte des Bereichs für Steuerdaten haben, um so Daten in den Bereich für Steuerdaten einfügen oder daraus entnehmen zu können, wodurch ein bidirektionaler Datenkanal für Überwachungsfunktionen zwischen der Signalquelle (S1) und der Monitoreinrichtung geschaffen werden kann.

2. Synchrones Übertragungssystem nach Anspruch 1, **dadurch gekennzeichnet, daß** zusätzlich ein Datenkanal zwischen der Monitoreinrichtung (NIM) und der Netzwerkmanagementeinrichtung (NMS) der Signalquelle (S1) besteht, die für die Übertragung eines Multiplexsignals von der Signalquelle (S1) zu einer Signalsenke (S7) verantwortlich ist.

3. Monitoreinrichtung (NIM), die in einem aus mehreren jeweils mehrere Netzelementen enthaltenden Einzelübertragungssystemen (Sx) bestehenden synchronen Übertragungssystem einsetzbar ist, in dem Digitalsignale zu Multiplexsignalen zusammengefaßt sind, in dem die Digitalsignale byteweise in Rahmen eines festgelegten Rahmenformats eingefügt sind, und in dem jeder Rahmen Bereiche für Steuerdaten und Bereiche für Nutzdaten hat, und die so ausgestaltet ist, daß sie Zugriff auf mindestens ein festgelegtes Byte des Bereichs für Steuerdaten hat, um so Daten in den Bereich für Steuerdaten einfügen oder daraus entnehmen zu können, wodurch ein bidirektionaler Datenkanal für Überwachungsfunktionen zwischen einer Signalquelle (S1) und der Monitoreinrichtung (NIM) geschaffen werden kann.

4. Verfahren zum Lokalisieren eines Fehlers in einer Übertragungsstrecke zwischen einer Datenquelle (S1) und einer Datensenke (S7) in einem synchronen Übertragungssystem, bei dem mehrere jeweils mehrere Netzelementen enthaltende Einzelübertragungssysteme (Sx) vorhanden sind, die jeweils einer Netzwerkmanagementeinrichtung (NMS) zugeordnet sind, bei dem die Digitalsignale byteweise in Rahmen eines festgelegten Rahmenformats eingefügt sind, und bei dem jeder Rahmen Bereiche für Steuerdaten und Bereiche für Nutzdaten hat, wobei das Verfahren die folgenden Schritte umfaßt:
- Überwachen der Übertragungsstrecke mittels mehrerer Monitoreinrichtung (NIM), die jeweils Zugriff auf mindestens ein festgelegtes Byte des Bereichs für Steuerdaten haben,
- Schaffen eines bidirektionalen Datenkanales zwischen einer Signalquelle (S1) und einer der Monitoreinrichtungen (NIM) für Überwachungsfunktionen, indem Daten in den Bereich für Steuerdaten eingefügt oder daraus entnommen werden und
- Meiden eines aufgetretenen Fehlers von der einen Monitoreinrichtung (NIM) zu der Datenquelle (S1) über den geschaffenen Datenkanal.

5. Übertragungssystem nach Anspruch 1 oder Monitoreinrichtung nach Anspruch 3 oder Verfahren nach Anspruch 4, **dadurch gekennzeichnet, daß** das festgelegte Byte das K3, K4, N1, N2 oder G1 Byte ist, die in einem System für die synchrone digitale Hierarchie definiert sind.

## Claims

1. Synchronous transmission system for digital signals combined into multiplex signals
- which comprises a transmission line between a signal source (S1) and a signal sink (S7),
- in which several individual transmission systems (Sx) are present each containing several network elements, each of which systems is allocated to a network management system (NMS),
- in which the digital signals are introduced as bytes in frames of an established frame format, and
- in which each frame has areas for control data and areas for useful data,
**characterised in that**
distributed over the transmission line are monitoring devices (NIM) which are controlled by the network management system of the signal source and which have access to at least one defined byte of the area for control data in order thus to insert data in the area for control data or extract data therefrom, whereby a bidirectional data channel can be created for monitoring functions between the signal source (S1) and the monitoring device.

2. Synchronous transmission system according to claim 1, **characterised in that** in addition a data channel exists between the monitoring device (NIM) and the network management system (NMS) of the signal source (S1), which channel is responsible for transmission of a multiplex signal from the signal source (S1) to a signal sink (S7).

3. Monitoring device (NIM) which can be used in a synchronous transmission system comprising several individual transmission systems (Sx) each containing several network elements, in which digital signals are combined into multiplex signals, in which the digital signals are inserted as bytes in frames of an established frame format, and in which each frame has areas for control data and areas for useful data, and which is structured so that it has access to at least one defined byte of the area for control data in order thus to be able to insert data in the area for control data or extract data therefrom, whereby a bidirectional data channel can be created for monitoring functions between the signal source (S1) and the monitoring device (NIM).

4. Process for locating a fault in a transmission line between a data source (S1) and a data sink (S7) in a synchronous transmission system in which in each case several individual transmission systems (Sx) are present each containing several network elements, each of which transmission systems is allocated to a network management system (NMS), where the digital signals are introduced as bytes in frames of an established frame format and in which each frame has areas for control data and areas for useful data, where the process comprises the following steps:
- monitoring of the transmission lines by means of several monitoring devices (NIM), each of which has access to at least one defined byte of the area for control data,
- creation of a bidirectional data channel between a signal source (S1) and one of the monitoring devices (NIM) for monitoring functions, where data is inserted in the area for the control data or extracted therefrom, and
- reporting of a fault occurring by the one monitoring device (NIM) to the data source (S1) via the created data channel.

5. Transmission system according to claim 1 or monitoring device according to claim 3 or process according to claim 4, **characterised in that** the defined byte is the K3, K4, N1, N2 or Gl byte as defined in a system for synchronous digital hierarchy.

## Revendications

1. Système de transmission synchrone pour des signaux numériques regroupés en signaux multiplex, qui comprend
- un tronçon de transmission entre une source de signaux (S1) et un collecteur de signaux (S7),
- dans lequel se trouvent plusieurs systèmes de transmission individuelle (Sx) contenant respectivement plusieurs éléments de réseau, qui sont attribués respectivement à un système de gestion de réseau (NMS),
- dans lequel les signaux numériques sont insérés byte par byte dans le cadre d'un format de cadre défini, et
- dans lequel chaque cadre a des zones pour des données de commande et des zones pour des données utiles,
**caractérisé en ce que**
sur le tronçon de transmission sont répartis des moniteurs (NIM), qui sont contrôlés par le système de gestion de réseau de la source de signaux et ont accès à au moins un byte fixé de la zone pour des données de commande, afin de pouvoir insérer ainsi des données dans la zone pour les données de commande ou d'en enlever, un canal de données bidirectionnel pouvant être créé pour des fonctions de contrôle entre la source de signaux (S1) et le moniteur.

2. Système de transmission synchrone selon la revendication 1, **caractérisé en ce qu'**en supplément un canal de données existe entre le moniteur (NIM) et le système de gestion de réseau (NMS) de la source de signaux (S1), qui est responsable de la transmission d'un signal multiplex de la source de signaux (S1) à un collecteur de signaux (S7).

3. Moniteur (NIM), qui peut être utilisé dans une transmission synchrone comprenant plusieurs systèmes de transmission individuelle (Sx) contenant plusieurs éléments de réseau, système dans lequel des signaux numériques sont regroupés en signaux multiplex, dans lequel les signaux numériques sont insérés byte par byte dans le cadre d'un format de cadre fixé, et dans lequel chaque cadre a des zones pour des données de commande et des zones pour des données utiles, et qui est équipé de sorte qu'il a accès à au moins un byte fixé de la zone pour des données utiles, afin de pouvoir ainsi insérer des données dans la zone pour des données de commande ou en enlever, un canal de données bidirectionnel pouvant être créé pour des fonctions de contrôle entre une source de signaux (S1) et le moniteur (NIM).

4. Procédé pour la localisation d'une erreur dans un tronçon de transmission entre une source de données (S1) et un collecteur de données (S7) dans un système de transmission synchrone, dans lequel plusieurs systèmes de transmission individuelle (Sx) contenant plusieurs éléments de réseau sont présents, lesquels sont attribués respectivement à un système de gestion de réseau (NMS), dans lequel les signaux numériques sont insérés byte par byte dans le cadre d'un format de cadre défini, et dans lequel chaque cadre a des zones pour des données de commande et des zones pour des données utiles, le procédé comprenant les étapes suivantes :
- contrôle du tronçon de transmission au moyen de plusieurs moniteurs (NIM), qui ont chacun accès à au moins un byte fixé de la zone pour des données de commande,
- création d'un canal de données bidirectionnel entre une source de signaux (S1) et l'un des moniteurs (NIM) pour des fonctions de contrôle, du fait que des données sont insérées dans la zone pour des données de commande ou en sont prélevées et
- signalement d'une erreur survenue par un moniteur (NIM) à la source de données (S1) au moyen du canal de données créé.

5. Système de transmission selon la revendication 1 ou moniteur selon la revendication 3 ou procédé selon la revendication 4, **caractérisé en ce que** le byte fixé est le byte K3, K4, N1, N2 ou Gl, qui sont définis dans un système pour la hiérarchie numérique synchrone.
